(19) Europäisches Patentamt
European Patent Office
Office européen des brevets

(11) Publication number: **0 373 909 A2**

(12) # EUROPEAN PATENT APPLICATION

(21) Application number: **89313014.6**

(22) Date of filing: **13.12.89**

(51) Int. Cl.[5]: **A01N 37/18, A01N 37/38**

(30) Priority: **14.12.88 GB 8829166**

(43) Date of publication of application: **20.06.90 Bulletin 90/25**

(84) Designated Contracting States: **AT BE CH DE ES FR GB GR IT LI LU NL SE**

(71) Applicant: **NATIONAL RESEARCH DEVELOPMENT CORPORATION**
**101 Newington Causeway**
**London SE1 6BU(GB)**

(72) Inventor: **Greig-Smith, Peter William**
**Woodland Cottage Furze Hill Road Headley**
**Bordon Hampshire GU35 8HA(GB)**
Inventor: **Wilson, Michael Frank**
**3 Wolsey Grove**
**Esher Surrey KT10 8NU(GB)**

(74) Representative: **Stephenson, Gerald Frederick**
**Patent Department National Research Development Corporation 101 Newington Causeway**
**London SE1 6BU(GB)**

(54) **Improvements in or relating to rodent control.**

(57) Compounds of formula (I)

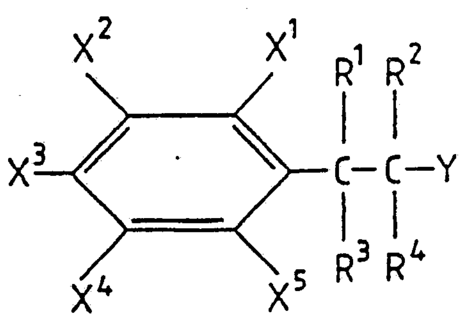

(I)

wherein $X^1$ and $X^5$ are each separately selected from hydrogen and $C_{1-4}$alkyl, halogeno and halogeno-substituted $C_{1-4}$ alkyl groups; $X^2$, $X^3$ and $X^4$ are each separately selected from hydrogen and $C_{1-4}$ alkyl, hydroxy, $C_{1-4}$ alkoxy and phenoxy groups; $R^1$ and $R^2$ are each separately selected from hydrogen and $C_{1-4}$ alkyl groups; $R^3$ and $R^4$ are each hydrogen or together constitute the second bond of a carbon-carbon double bond joining $-CR^1R^3-$ and $-CR^2R^4-$; and Y is carbamoyl or carbamoyl N-substituted by one or two of the same or different $C_{1-4}$ alkyl groups are of value as rodent repellents.

EP 0 373 909 A2

## IMPROVEMENTS IN OR RELATING TO RODENT CONTROL

This invention relates to the control of rodents and in particular to compounds of use as rodent repellents.

The protection of agricultural and horticultural crops from damage by rodents is of considerable importance but many of the compounds which repel or destroy rodents are particularly unsuited to use in conjunction with food crops. This is especially true of the compound cycloheximide {3-[2-(3,5-dimethyl-2-oxocyclohexyl)-2-hydroxyethyl]glutarimide} marketed in Japan as a rodent repellent which is carcinogenic. There is therefore an existing need for environmentally acceptable rodent repellent compounds.

Various phenolic monomers have been included in rat diets as part of a study on the consumption of roughages by ruminants (Jung and Fahey, Journal of Nutrition, 1983, 113, 546). This study identified p-coumaric acid (p-hydroxycinnamic acid) and ferulic acid (3-hydroxy-2-methoxycinnamic acid) as depressing the feed intake of rats, although no suggestion was made that these compounds were of interest as rat repellents. We have now identified a group of cinnamic acid derivatives, some of which contain phenolic groups and others of which do not, that are of particular value as rodent repellents.

Accordingly, the present invention comprises the use as a rodent repellent of a compound of formula (I)

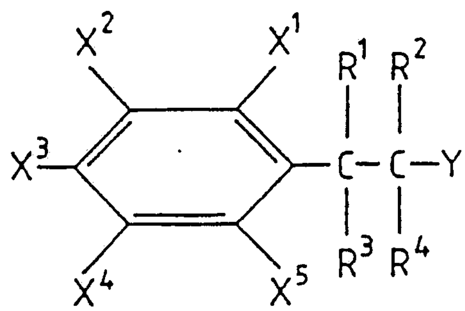

(I)

wherein $X^1$ and $X^5$ are each separately selected from hydrogen and $C_{1-4}$ alkyl, halogeno and halogeno-substituted $C_{1-4}$ alkyl groups; $X^2$, $X^3$ and $X^4$ are each separately selected from hydrogen and $C_{1-4}$ alkyl, hydroxy, $C_{1-4}$ alkoxy and phenoxy groups; $R^1$ and $R^2$ are each separately selected from hydrogen and $C_{1-4}$ alkyl groups; $R^3$ and $R^4$ are each hydrogen or together constitute the second bond of a carbon-carbon double bond joining $-CR^1R^3-$ and $-CR^2R^4-$; and Y is carbamoyl or carbamoyl N-substituted by one or two of the same or different $C_{1-4}$ alkyl groups.

The compounds (I) may exist in various stereoisomeric forms but in the case of the compounds in which $R^3$ and $R^4$ represent the second bond of a carbon-carbon double bond, i.e. cinnamamide and its derivatives and analogues, the preference is for the commonly occurring trans isomeric form rather than the cis isomeric form.

General preferences among the compounds of formula (I) are as follows. The $C_{1-4}$ alkyl groups referred to in several instances may for example be ethyl or particularly methyl. $X^1$ and $X^4$ are conveniently each separately selected from hydrogen or to a lesser extent from $C_{1-4}$ alkyl, or alternatively from a halogeno group such as fluoro, chloro, bromo or iodo, or to a lesser extent additionally from a halogeno-substituted methyl group, for example trifluoromethyl. $X^2$, $X^3$ and $X^4$ are conveniently each separately selected from hydrogen and $C_{1-4}$ alkoxy groups, especially ethoxy and particularly methoxy, or to a lesser extent additionally from phenoxy and also hydroxy. As regards $R^1$ and $R^2$ these are preferably each separately selected from hydrogen, methyl and ethyl, especially from methyl and particularly from hydrogen. Conveniently each of $R^1$ and $R^2$ is hydrogen or one is hydrogen, preferably $R^2$, and the other is a $C_{1-4}$ alkyl group, preferably methyl. $R^3$ and $R^4$ preferably together constitute the second bond of a double bond. In the case of a di-substituted group Y this is preferably substituted by two identical groups but Y is more conveniently mono-substituted, for example by ethyl or particularly methyl, or especially is an unsubstituted carbamoyl group.

Compounds of some particular interest have $X^2$ and $X^4$ which are each separately a $C_{1-4}$ alkoxy group (particularly the same one), for example an ethoxy or especially a methoxy group, conveniently together with groups $X^1$, $X^3$ and $X^5$ in which $X^1$ and $X^5$ are each hydrogen and $X^3$ is $C_{1-4}$ alkoxy (particularly the same one as each of $X^2$ and $X^4$), for example ethoxy or especially methoxy, or preferably together with groups $X^1$, $X^3$ and $X^5$ which are each hydrogen. Alternatively, other compounds of particular interest have

$X^1$, $X^2$, $X^3$, $X^4$ and $X^5$ which are each hydrogen. Such compounds of particular interest may conveniently have $R^3$ and $R^4$ which constitute a second bond of a carbon-carbon double bond, particularly together with $R^1$ and $R^2$ which are each hydrogen; Y especially being an unsubstituted carbamoyl group or to a lesser extent a mono-substituted carbamoyl group.

Examples of specific compounds of use in the present invention are

(1) 3,5-dimethoxycinnamamide;

(2) 3,4,5-trimethoxycinnamamide; and

(3) cinnamamide. Of these compounds (1) and (3) are of most interest with (3) being preferred for use as a rodent repellent.

Methods for synthesising the compounds (I) of use in the present invention will be readily apparent to the man skilled in the art. Thus the compounds may be synthesised by procedures described in the art for those same compounds or analogues thereof, by modifications of the procedures, or by procedures described for related compounds or modifications thereof. In particular, the corresponding cinnamic acid provides a suitable starting material, cinnamic acid itself conveniently being prepared by a Perkin reaction from benzaldehyde, for example using acetic acid and anhydrous sodium or potassium acetate, and ring substituted derivatives thereof being prepared similarly from a substituted benzaldehyde. In the preparation of the compounds (I) from cinnamic acids ring substituents may be protected as necessary during the process. Cinnamamide may conveniently be prepared by the reaction of cinnamoyl chloride (which can be prepared from cinnamic acid by reaction with thionyl chloride, phosphorus trichloride or phosphorus pentachloride) with ammonia or by forming the ammonium salt of cinnamic acid by reaction with ammonia and then heating this to give cinnamamide, ring substituted derivatives being prepared by the use of a substituted cinnamic acid as starting material and N-subtituted derivatives by the use of an appropriate primary or secondary amine in place of ammonia. The compound dihydrocinnamic acid in which $R^1$, $R^2$, $R^3$ and $R^4$ are each hydrogen may be prepared as a starting material by the hydrogenation of the carbon-carbon double bond of cinnamic acid, for example in the presence of a nickel catalyst, whilst ring substituted derivatives may be prepared similarly with protection of the substituents where necessary. Other compounds (I) in which $R^3$ and $R^4$ are each hydrogen may either be prepared from the corresponding unsaturated compound in the same way with protection of the group Y where necessary or by modification of the carboxy group of the corresponding dihydrocinnamic acid.

The compounds (I) are of interest in repelling a variety of rodents although they are of most interest in relation to the control of rabbits, voles (for example water voles), mice and particularly rats. Areas of use of the compounds (I) involve various horticultural contexts, for example the protection of the fruit and especially the seeds of growing crops. The compounds (I) are, however, of particular interest for the protection of harvested crops such as fruit and especially seeds. In general they may be used for the protection of any plant material and this may be in embryo, growing or harvested form, including the forms of seeds, seedlings, buds, leaves and other vegetative parts, and fruit. The compounds may either be applied to the material itself or in its vicinity, such as to a container for the material, for example a sack. The compounds (I) are also of potential interest in any context where it is desirable to prevent rodent damage, for example in the protection of structures and particularly electric cables and electronic components from nibbling or gnawing by rodents.

The present invention thus includes a method for repelling rodents which comprises treating plant material which is an embryo, growing or harvested crop, or any other substance which is exposed to rodents, with an amount effective as a rodent repellent of a compound of formula (I) as defined hereinbefore.

The compounds (I) may be formulated for application with various suitable types of diluent or carrier, including aqueous formulations, oily formulations, etc. For agricultural/horticultural purposes, and particularly for applications involving foodstuffs, the diluent or carrier will be selected with a view to its physiological acceptability. Whilst considerable variation will occur depending on the nature of the composition and the particular compound(s) (I) used, etc., it may be stated by way of guidance that the amount of active compound(s):diluent or carrier by weight will usually be in a range from 10:1 to 1:10,000, preferably 1:10 to 1:1,000.

One suitable type of formulation involves the use of aqueous acetone as a diluent, especially with a higher proportion of water than acetone, such as 60-90% water:40-10% acetone (by volume), for example 80% water: 20% acetone (by volume). However a variety of alternative diluents or carriers, for example those which are acceptable for application onto crops, may conveniently be used to provide a solution, suspension, emulsion or powder containing the compound (I). In producing more complex forms of composition the aim is to enhance the activity of the compound through presenting it in a more effective physical form whilst avoiding any masking of the repellent effect by the mode of formulation. Of particular

interest are slow release compositions which produce a more prolonged effect from a single application of the compound, the amount of the compound being maintained at an appropriate level through balancing the breakdown of the compound already released with the release of further amounts of the compound. Various conventional types of slow release formulation are suitable for this purpose but micro-encapsulation is of particular interest, for example in a polyurea capsule. In the case of compositions for treating harvested seeds, etc., solid carriers, for example one of various clays such as kaolin and bentonite, may conveniently be used to provide powder formulations, together with an emulsifying agent where appropriate. Various compositions containing the compounds (I) are the subject of a U.K. and various overseas applications claiming priority from U.K. Patent Application Number 8729109.

Various other components may be included with the compounds (1) in a composition of use in the present invention. These include emulsifying agents for enhancing both the preparation of the composition and its application to the plant or other material. Suitable emulsifying agents are particularly the non-ionic surface active agents and especially those based on a polyether structure, for example polyoxyethylene stearate and nonylphenylpolyoxyethanol. Other types of additional component include various colouring agents, for example the commercially available materials Sky Blue and other commercially available food colourings, since rodents may be repelled by unfamiliar or aversive visual clues, agents which enhance adhesion of the composition to the material or substance to which it is applied, for example Rhoplex AC-33, Trition AE and Acronal 40 (BASF), as well as insecticides, fungicides, etc., as appropriate. It will also be appreciated that the composition may contain more than one compound (I), since this is often a more convenient approach than applying two such compounds separately.

Treatment will be applied at an appropriate time, for example either in advance or in response to rodent attack. The application of the composition containing the compounds (I) may conveniently be effected by standard means, and often by spraying, and may be repeated as necessary to maintain the desired level of control. Further general information concerning the formulation and use of rodent repellents is provided by data on the use of existing repellents such as cycloheximide and thiram (tetramethylthiruramdisulphide).

The rate of application of the compounds will depend both upon the particular compound (I) which is being used and upon the nature and location of the substance being treated. However, by way of guidance it may be stated that for the treatment of growing crops an application rate of 0.1 to 100, particularly 1 to 10 kilograms per hectare, of the compound (I) is often appropriate, the aim being to use the minimum effective quantity which may, for example, be 5 kilograms per hectare or a lesser amount as indicated. For the treatment of harvested crops, for example seeds, and containers for such crops, etc., an application rate of 0.01 to 1, particularly 0.05 to 0.5% w/w, of the compound (I) to treated material is often appropriate. Once again, the aim is to use the minimum effective quantity which may, for example, be 0.1% w/w or a lesser amount as indicated.

For non-agricultural/horticultural purposes other types of formulation may be of interest such as a coating composition comprising a material incorporating one or more compounds (I), for example paints and plastics materials, which is used to coat items such as electrical cables and electronic components to provide protection from rodent attack. A variety of materials may be used in producing such a coating composition, including paints and plastics materials, but particularly in the case of the plastics materials, these will often comprise a polymeric material which is mixed with the compound(s) (I). The paints and plastics materials may include paint base materials and polymers known for use in such a protective context and paticularly those used in conjunction with the compound cycloheximide marketed by Tanabe Seiyaku Co. Ltd. of Osaka, Japan as a rodent repellent. The levels of the compound(s) (I) in such compositions may conveniently be broadly as described hereinbefore.

The present invention thus includes a coating composition comprising a material, for example a paint or plastics material, incorporating a compound (I) as defined hereinbefore and also electrical cable or electronic components coated with such a material.

Information on the use of cycloheximide is to be found, for example in European patent application number 0227987A and its equivalents including Japanese patent applications 62135576, 62135581 and 62135544, and also in Japanese patent applications 63104902 and 61155325, all in the name of Tanabe Seiyaku Co. Ltd., as well as in other Japanese patent applications in other names (1146946, 63225672, 63225408, 63055239 and 57005765). Thus, for example, one composition for coating electric cables, etc., may comprise a 94.5:5:0.5 w/w ratio of acetone:acrylic acid synthetic rubber:active compound while another may comprise 100 parts by weight of a polyvinylchloride resin and 0.5 to 10 parts by weight of a micro-encapsulated preparation containing a proportion selected in the range of 1-40% w/w of the active compound. Micro-encapsulated preparations of the active compound may also be used in treating the containers of harvested crops, for example sacks, a suitable technique of encapsulation being the subject particularly of the European patent application 0227987A mentioned hereinbefore.

The invention is illustrated by the following Example.

EXAMPLE

(The compound of formula (1) used herein and also the two cinnamic acid compounds were predominantly of the trans isomeric form.)

Two-choice feeding trials using wild rats

A group of wild rats (Rattus norvegicus) was given three weeks to acclimatise to laboratory conditions before being tested, during which time any sick or inured animals were discarded. The animals were housed singly in suspended cages with wire mesh bottoms and during acclimatisation were fed on a pelleted Grain Harvester 41B Breeding diet. One week before the four day test period the rats were prebaited with ground Grain Harvester Breeding diet in order to overcome any neophobic response. The diet during the test period consisted of ground 41B diet which had been sprayed with one of the test compounds. The compounds tested were cinnamamide and, for comparative purposes, cinnamic acid and 3-hydroxy-2-methoxy-cinnamic acid.

The compounds for testing were each dissolved in an 80/20 v/v acetone/water mixture and sprayed onto the ground 41B diet to give a 0.5% w/w compound diet concentration. The diet was oven dried and then left to absorb atmospheric moisture. The control food was sprayed with the same volume of acetone/water mixture and then treated similarly.

Twenty rats were divided into four groups of five individually caged animals. The groups were presented with a two-choice diet consisting of (1) diet treated with one of the three compounds on test or with acetone/water alone and (2) a control consisting of diet treated with acetone/water alone or of untreated diet in the case of the group offered the acetone/water treated diet rather than a compound treated diet, an amount of food being provided sufficient to avoid starvation. The test was conducted for four days during which food consumption was monitored daily. The position of the food bowls was alternated each day in order to overcome the confusing of food preference with position preference and ample water was supplied throughout the trial.

The data obtained in the four day two-choice test is presented in the Table for mean consumption of treated food and of control food, in each case together with the standard deviation. It will be seen that the cinnamamide treated diet is consumed least and particularly at a markedly lower level than 3-hydroxy-2-methoxycinnamic acid.

Table 1

| Two-choice test: food consumption | | |
|---|---|---|
| Compound | Consumption of treated diet grams | Consumption of control grams |
| Acetone/water | 34.8 ± 13.9 | 70.5 ± 17.0 |
| Cinnamamide | 2.8 ± 1.1 | 99.8 ± 7.8 |
| Cinnamic acid | 43.7 ± 10.8 | 67.1 ± 13.6 |
| 3-Hydroxy-2-methoxy-cinnamic acid | 16.8 ± 9.8 | 80.5 ± 3.9 |

No-choice feeding trials using wild rats

A group of wild rats (Rattus norvegicus) was given three weeks to acclimatize to laboratory conditions during which time sick or injured animals were discarded. The animals were housed singly in suspended cages with wire mesh bottoms and fed on a pelleted SDS (Special Diet Services) diet. The diet during the test period consisted of ground SDS which had been treated with one of the test compounds. The compounds tested were cinnamamide and, for comparative purposes, dimethylanthranilate (DMA). One

week prior to the test period, rats were prebaited with ground Grain Harvester Breeding diet in order to overcome any neophobic response.

The compounds for testing were each dissolved in an 80/20 acetone/water v/v mixture. In this form they were applied to the ground SDS in an industrial mixer to achieve a 0.5% w/w concentration. The control food was treated in the same manner but receiving the same volume of acetone/water mixture containing no added compound.

Thirty rats were divided into three groups of ten, each receiving a different treatment. They were presented with a no-choice test, group one receiving the cinnamamide treated diet, group two the DMA treated diet and group three the control diet. The trial lasted three days during which individual rats were presented with a single bowl of food. Food consumption and body weight were measured daily.

The data obtained is displayed in Tables 2 and 3 and the corresponding Figures 1 and 2. It will be seen that rats ate significantly less food and lost significantly more weight on the cinnamamide diet than they did on the control or DMA diets. These results were consistent over the three trial days. No significant differences were found between the DMA and control diets.

Table 2

| No-choice test : food consumption | | | |
|---|---|---|---|
| Treatment | Food consumed (g) | | |
| | Day 1 | Day 2 | Day 3 |
| Cinnamamide | 6.3 | 6.7 | 13.1 |
| DMA | 20.7 | 22.2 | 21.2 |
| Control | 24.7 | 23.6 | 23.7 |

Table 3

| No-choice test : weight change | | | |
|---|---|---|---|
| Treatment | Gain or loss of body weight (g) | | |
| | Day 1 | Day 2 | Day 3 |
| Cinnamamide | -14.1 | -22.3 | -18.3 |
| DMA | 4.5 | 3.9 | 3.3 |
| Control | 7.9 | 4.7 | 7.2 |

The data is further illustrated in Figures 1 and 2 which compare the results for food consumption and weight change, respectively, for the three diets.

## Claims

1. The use as a rodent repellent of a compound of formula (I)

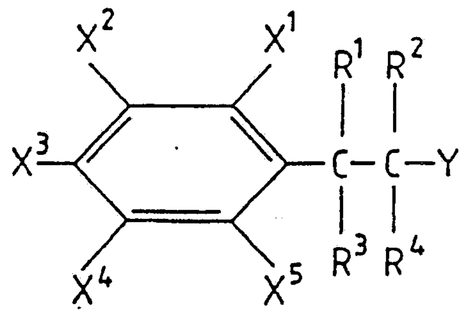

(I)

wherein $X^1$ and $X^5$ are each separately selected from hydrogen and $C_{1-4}$ alkyl, halogeno and halogeno-substituted $C_{1-4}$ alkyl groups; $X^2$, $X^3$ and $X^4$ are each separately selected from hydrogen and $C_{1-4}$ alkyl, hydroxy, $C_{14}$ alkoxy and phenoxy groups; $R^1$ and $R^2$ are each separately selected from hydrogen and $C_{1-4}$ alkyl groups; $R^3$ and $R^4$ are each hydrogen or together constitute the second bond of a carbon-carbon double bond joining $-CR^1R^3-$ and $-CR^2R^4-$; and Y is carbamoyl or carbamoyl N-substituted by one or two of the same or different $C_{1-4}$ alkyl groups.

2. The use according to Claim 1, in which $X^1$ and $X^5$ are each separately selected from hydrogen and $C_{1-4}$ alkyl.

3. The use according to Claim 1 or 2, in which $X^2$, $X^3$ and $X^4$ are each separately selected from hydrogen, $C_{1-4}$ alkyl, and $C_{1-4}$ alkoxy groups.

4. The use according to Claim 1, 2 or 3, in which $R^1$ and $R^2$ are each hydrogen and $R^3$ and $R^4$ together constitute the second bond of a carbon-carbon double bond.

5. The use according to any of Claims 1 to 4, in which Y is carbamoyl.

6. The use according to any of the preceding claims, in which $X^1$ to $X^5$ are each hydrogen.

7. The use according to any of Claims 1 to 5, in which $X^2$, $X^3$ and $X^4$ are each separately a $C_{1-4}$ alkoxy group, or $X^3$ is hydrogen and $X^2$ and $X^4$ are each separately a $C_{1-4}$ alkoxy group.

8. The use according to Claim 7, in which $X^2$, $X^3$ and $X^4$ are each methoxy.

9. The use according to Claim 7, in which $X^3$ is hydrogen and $X^2$ and $X^4$ are each methoxy.

10. The use as a rodent repellent of 3,4,5-trimethoxycinnamamide.

11. The use as a rodent repellent of 3,5-dimethoxycinnamamide.

12. The use as a rodent repellent of cinnamamide.

13. The use as a rodent repellent of more than one compound selected from 3,4,5-trimethoxycinnamamide, 3,5-dimethoxycinnamamide and cinnamamide.

14. A composition for use as a rodent repellent which comprises a compound of formula (I)

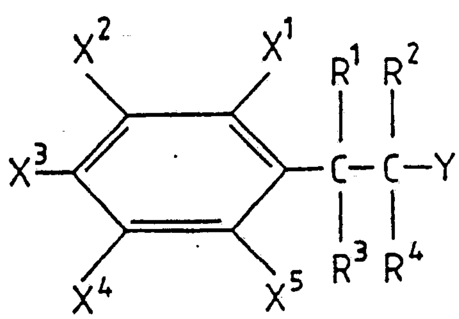

(I)

wherein $X^1$ and $X^5$ are each separately selected from hydrogen and $C_{1-4}$ alkyl, halogeno and halogeno-substituted $C_{1-4}$ alkyl groups; $X^2$, $X^3$ and $X^4$ are each separately selected from hydrogen and $C_{1-4}$ alkyl, hydroxy, $C_{1-4}$ alkoxy and phenoxy groups; $R^1$ and $R^2$ are each separately selected from hydrogen and $C_{1-4}$ alkyl groups; $R^3$ and $R^4$ are each hydrogen or together constitute the second bond of a carbon-carbon double bond joining $-CR^1R^1-$ and $-CR^2R^4-$; and Y is carbamoyl or carbamoyl N-substituted by one or two of the same or different $C_{1-4}$ alkyl groups.

15. A composition according to Claim 14, in which the compound of formula (I) is as defined in any of Claims 2 to 13.

16. A container of a harvested plant material, which container is treated with a compound of formula (I) as defined in any of Claims 1 to 13.

17. A container according to Claim 16 which is a sack.

18. A coating composition comprising a material incorporating a compound (I) as defined in any of Claims 1 to 13.

19. A composition according to Claim 18 which is a paint or plastics material.

20. Electrical cables or electronic components coated with a composition according to Claim 18 or 19.

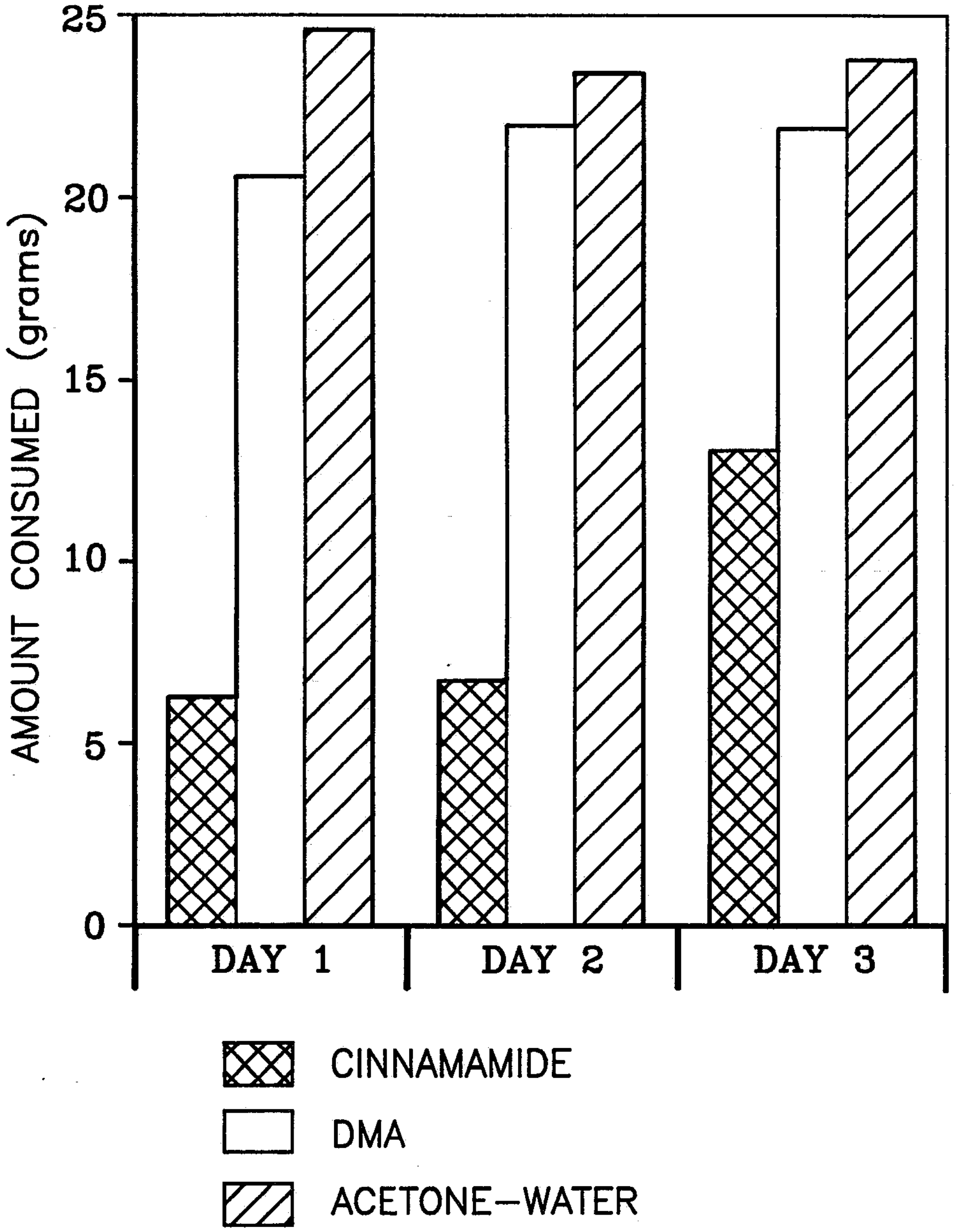
25
20
15
10
5
0
AMOUNT CONSUMED (grams)
DAY 1
DAY 2
DAY 3
CINNAMAMIDE
DMA
ACETONE-WATER

Fig.1

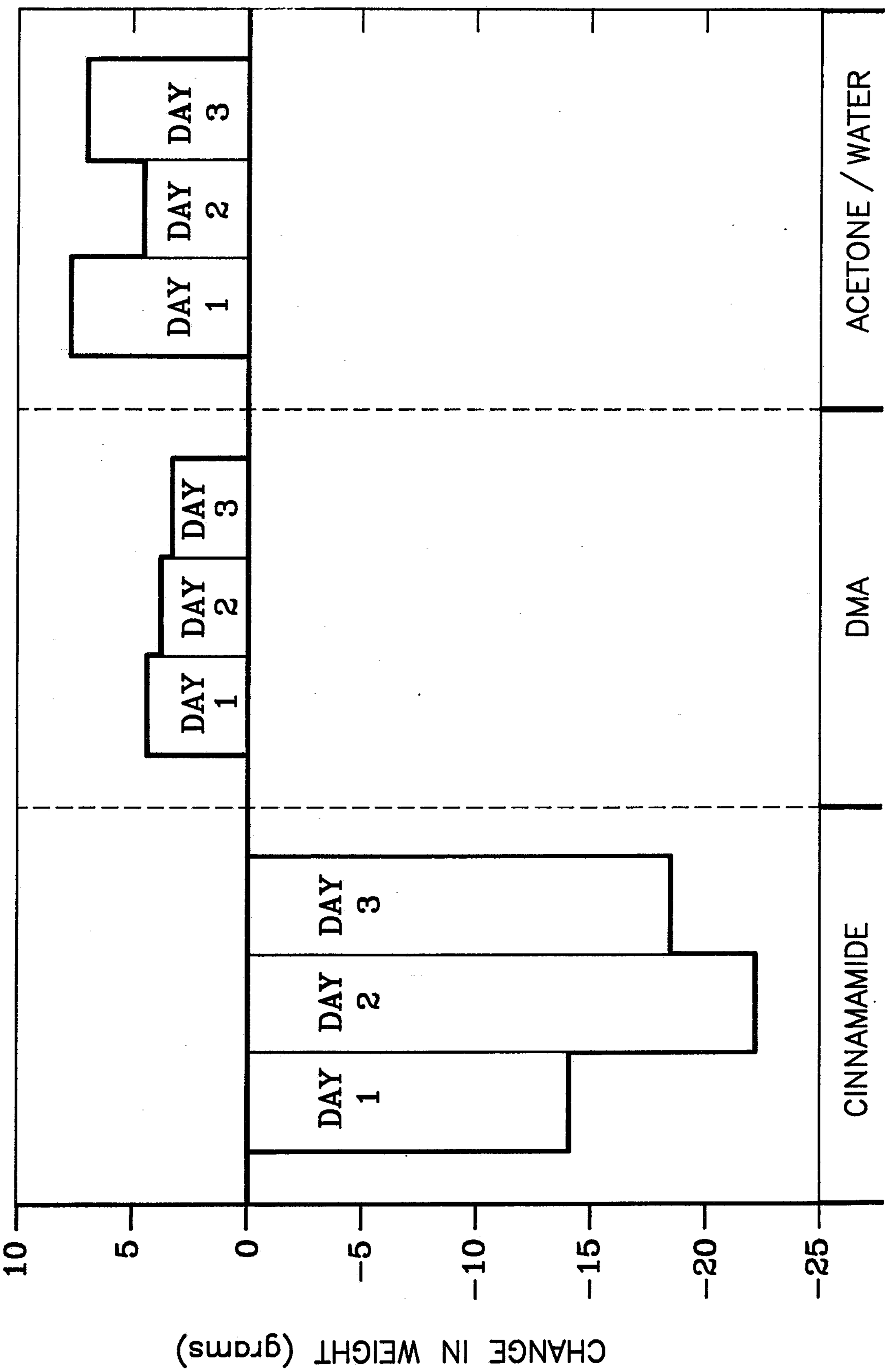
CHANGE IN WEIGHT (grams)
10
5
0
-5
-10
-15
-20
-25
DAY 1
DAY 2
DAY 3
CINNAMAMIDE
DAY 1
DAY 2
DAY 3
DMA
DAY 1
DAY 2
DAY 3
ACETONE / WATER

Fig.2